# NEUE EUROPÄISCHE PATENTSCHRIFT

(11) **EP 2 671 741 B2**
(45) Veröffentlichungstag und Bekanntmachung des Hinweises auf die Entscheidung über den Einspruch: **04.05.2022**
(45) Hinweis auf die Patenterteilung: 07.05.2014
(21) Anmeldenummer: 13166812.1
(22) Anmeldetag: 07.05.2013
(51) Int. Cl.: B60G 7/00, F16C 7/02, F16C 7/08, B21D 53/88, B21D 5/00, B62D 65/12, B21D 35/00

(54) **Querlenker sowie Verfahren zum Herstellen des Querlenkers**
Transverse control arm and method for production of the transverse control arm
Bras oscillant transversal et son procédé de fabrication

(30) Priorität: 06.06.2012 DE 102012104909
(43) Veröffentlichungstag der Anmeldung: 11.12.2013
(73) Patentinhaber: Benteler Automobiltechnik GmbH, 33102 Paderborn (DE)
(72) Erfinder: Korte, Frederic, 33102 Paderborn (DE); Meyer, Stephan, 33605 Bielefeld (DE); Rackow, Volker, 33106 Paderborn (DE); Rieskamp, Daniel, 49479 Ibbenbüren (DE)
(74) Vertreter: Griepenstroh, Jörg

(56) Entgegenhaltungen:
- EP-A1- 2 266 821
- EP-A1- 2 360 036
- EP-A1- 2 455 244
- EP-A2- 1 125 774
- EP-A2- 2 000 335
- EP-A2- 2 524 825
- DE-A1- 10 334 192
- DE-A1-102006 051 609
- DE-A1-102008 015 393
- DE-A1-102008 056 271
- DE-A1-102009 008 842
- DE-A1-102010 006 284
- DE-A1-102010 007 946
- DE-A1-102010 010 665
- DE-B3-102006 028 713
- DE-B3-102006 028 713
- JP-A- H08 233 009
- JP-A- 2010 126 095

## Beschreibung

Die vorliegende Erfindung betrifft einen Querlenker zur Anordnung an einem Kraftfahrzeug gemäß den Merkmalen im Oberbegriff von Patentanspruch 1.

Die vorliegende Erfindung betrifft weiterhin ein Verfahren zum Herstellen eines Querlenkers gemäß den Merkmalen im Oberbegriff von Patentanspruch 11.

Aus dem Stand der Technik sind Querlenker bekannt, die an Radaufhängungen von Kraftfahrzeugen eingesetzt werden um einen Radträger gegenüber der Kraftfahrzeugkarosserie führend abzustützen. Hierzu sind verschiedenste Ausführungsvarianten von Querlenkern bekannt, die als Gußbauteile oder aber auch als Schweißbauteile oder aber auch als Blechprofile hergestellt werden.

Beispielsweise ist aus der DE 10 2009 008 842 A1 ein Querlenker bekannt, der als einteiliges Stanzbauteil aus einem 4 bis 12mm dicken Blech gepresst ist. Ein solcher Lenker ist durch die Blechdicke bedingt recht massiv ausgebildet und weist im Falle des Einsatzes eines Stahlwerkstoffes aufgrund des spezifischen Gewichts des Werkstoffs ein hohes Bauteilgewicht auf.

Um die Fahrdynamikeigenschaften eines Kraftfahrzeuges positiv zu beeinflussen ist es jedoch im Bestreben der Kraftfahrzeughersteller auf der Seite der ungefederten Radmassen möglichst leichte Komponenten einzusetzen.

Weiterhin ist beispielsweise aus der DE 10 2006 051 609 A1 ein Querlenker bekannt, der als zweiteiliges Schweißbauteil ausgebildet ist, wobei zwei Schalenelemente formschlüssig ineinandergreifen und miteinander gefügt sind. Eine solche Konstruktion ist recht aufwendig, da zwei voneinander verschiedene Bauteile separat hergestellt werden und anschließend zu einem Bauteil vereinigt werden, wobei insbesondere bei der Herstellung von Fahrwerkskomponenen höchste Anforderungen an die Genauigkeit der zu erzielenden Geometrien gestellt werden.

Ferner ist aus der DE 10 2010 006 284 A1 ein Querlenker bekannt, der als Gußteil ausgebildet ist. Zur Herstellung solcher Querlenker werden diese in Formen gegossen, anschließend abgekühlt und nachfolgend mechanisch insbesondere spanabhebend bearbeitet, so dass Lageraugen ausgebildet werden. Gießbauteile sind zwar günstig herzustellen, weisen mitunter jedoch ein hohes Eigengewicht auf wobei weiterhin aufwendige mechanische Maßnahmen zur Nachbearbeitung von Nöten sind. Ferner sind aus der EP 2 000 335 A2, DE 10 2008 015 398 A1 oder aber auch der EP 2 266 821 A1 Querlenker bekannt, die als Blechumformbauteil hergestellt sind.

Aufgabe der vorliegenden Erfindung ist es daher ausgehend vom Stand der Technik einen Querlenker bereit zu stellen, der insbesondere unter wirtschaftlichen Aspekten kostengünstig herstellbar ist, gleichzeitig eine hohe Genauigkeit aufweist und besonders gute Festigkeitseigenschaften besitzt, bei gleichzeitig geringem Bauteilgewicht. Ferner ist es Aufgabe der vorliegenden Erfindung ein Verfahren zur Herstellung eines solchen Querlenkers aufzuzeigen.

Die zuvor genannte Aufgabe wird erfindungsgemäß mit einem Querlenker zur Anordnung an einem Kraftfahrzeug gemäß den Merkmalen in Patentanspruch 1 gelöst.

Der verfahrenstechnische Teil der Aufgabe wird weiterhin mit einem Verfahren zum Herstellen eines Querlenkers mit den Merkmalen in Patentanspruch 11 gelöst.

Vorteilhafte Ausführungsvarianten der vorliegenden Erfindung sind Bestandteil der abhängigen Patentansprüche.

Die erfindungsgemäße Aufgabe wird mit einem Querlenker zur Anordnung an einem Kraftfahrzeug, wobei der Querlenker zwei Lageraufnahmen zur Aufnahme von elastischen Lagern aufweist und einen bogenförmigen Mittelabschnitt besitzt, der sich zwischen den Lageraufnahmen erstreckt, dadurch gelöst, dass der Querlenker als einteiliges und werkstoffeinheitliches Umformbauteil ausgebildet ist, wobei der Querlenker in dem bogenförmigen Mittelabschnitt im Querschnitt als Hohlprofil ausgebildet ist.

Im Rahmen der Erfindung wird somit ein Querlenker bereit gestellt, der als Blechumformbauteil ausgebildet ist, ganz besonders bevorzugt aus einem Stahlblech. Durch den bogenförmigen Mittelabschnitt kann der Querlenker dennoch seine mitunter hochkomplexe Geometrie zum vorbeiführen von Stoßdämpfern, Lenkerstangen oder ähnlichen Bauteilkomponenten beibehalten, ist zugleich besonders kostengünstig als Umformbauteil in einem Umformprozess herstellbar und besitzt aufgrund des hohlprofilartigen Mittelabschnittes ein sehr geringes Eigengewicht. Dadurch das der bogenförmige Mittelabschnitt im Querschnitt als Hohlprofil ausgebildet ist, weist der erfindungsgemäße Querlenker trotzt des geringen Gewichtes und der einfachen Herstellbarkeit in nur einem Umformprozess eine besonders hohe Steifigkeit auf.

Aufgrund der Tatsache, dass es sich um ein Hohlbauteil handelt, wird wenig Werkstoff eingesetzt, wodurch der Bedarf an Rohmaterial gegenüber einem Lenker der aus einem massiven Blech gestanzt wird oder aber auch aus Werkstoff gegossen wird deutlich eingespart wird. Ferner muss der erfindungsgemäße Querlenker nicht durch aufwendige Nachbearbeitungsverfahren mechanisch nachbearbeitet werden, insbesondere spanabhebend nachbearbeitet werden, so dass zum einen durch den zunächst eingesparten Rohmaterialaufwand, zum anderen durch die ersparten Nachbearbeitungsoperationen wiederum die Herstellungskosten des erfindungsgemäßen Lenkers sinken.

Gleichzeitig ist es jedoch möglich, den Querlenker derart herzustellen, dass in der Umformoperation bereits auch eine Kalibrierung der Lageraufnahmen, die sich bevorzugt jeweils in einem Endabschnitt des Querlenkers befinden, herzustellen. Somit ist es in nur einem Umformprozess in einem Umformwerkzeug bei der Herstellung des erfindungsgemäßen Lenkers möglich eine Platine bzw. einen Platinenzuschnitt zu dem fertigen Lenker umzuformen, der gleichzeitig die geforderten Lageraufnahmen in höchster Genauigkeit relativ zueinander und auch absolut am Lenker aufweist herzustellen. Insgesamt zeichnet sich der erfindungsgemäße Querlenker als besonders vorteilig gegenüber dem Stand der Technik durch die Materialeinsparung, durch das geringe Gewicht, durch die günstige Herstellbarkeit und das hohe Steifigkeitsverhalten aus.

Der Mittelabschnitt des erfindungsgemäßen Querlenkers ist als im Querschnitt offenes Hohlprofil ausgebildet. Im Rahmen der Erfindung ist es möglich den Querlenker zunächst in einer Umformoperation derart umzuformen, dass zwei umgeformte Enden im Mittelabschnitt formschlüssig aneinander liegen.

Zum einen können die einander abgebogenen Enden des Mittelabschnittes zwar formschlüssig aneinander anliegen, diese werden jedoch nicht weiter gefügt, was im Rahmen der Erfindung auch als offenes Hohlprofil anzusehen ist. Bevorzugt weisen jedoch die beiden abgebogenen Enden des Mittelabschnitts einen Abstand auf, so dass zwar im Mittelabschnitt im Querschnitt ein Hohlprofil gebildet ist, wobei dieses Hohlprofil jedoch an einer Seite offen ist. Im Rahmen der Erfindung weist das Hohlprofil des Mittelabschnittes im Querschnitt insbesondere eine U-förmige, ganz besonders bevorzugt eine C-förmige Konfiguration auf.

Im Rahmen der Erfindung sind die an dem Querlenker angeordneten Lager als Gummilager ausgebildet. Besonders bevorzugt sind diese Gummilager in den Querlenker eingesetzt. Bei Gummilagern handelt es sich im Rahmen der Erfindung insbesondere um Kunststofflager oder aber auch Elastomerlager, wobei diese insbesondere auch aus einem Kautschuk oder aber einem anderen gummiartigen und/oder elastischen Werkstoff ausgebildet sind. Besonders bevorzugt sind die Gummilager selbst in den Querlenker eingepresst, wobei ganz besonders bevorzugt die Lager als Gummi-Metall-Lager ausgebildet sind. Dabei kann das Lager selbst als Gummi-Metall-Lager von einer außen umgebenden hülsenartigen Öse berandet sein, wobei dann die Öse in die Lageraufnahmen eingepresst ist. Im Rahmen der Erfindung ist es jedoch auch vorstellbar, das Gummilager selber in den Lageraufnahmen stoffschlüssig zu koppeln, beispielsweise durch einen Klebevorgang oder aber auch durch einen Vulkanisationsvorgang. Im Rahmen der Erfindung werden insbesondere die Lager direkt in die Lageraufnahmen eingesetzt bzw. eingepresst, so dass keine zusätzlichen Bauteile zum Ausbilden der Lageraufnahme oder aber der Lageraugen an dem Querlenker ausgebildet oder aber angeordnet werden müssen. Hierdurch werden ebenfalls wiederum Herstellungskosten des einbaufertigen Querlenkers mit eingesetzten Lagern eingespart.

Weiterhin besonders bevorzugt ist der Querlenker derart ausgebildet, dass der Mittelabschnitt im Querschnitt aus einem Steg und sich von dem Steg erstreckenden Seitenwangen ausgebildet ist. Somit wird der Mittelabschnitt derart ausgebildet, dass zunächst ein Steg in einer Platine definiert wird und von diesem Steg aus die Seitenwangen abgebogen werden, so dass sie sich von dem Steg aus erstrecken. Die Seitenwangen sind bevorzugt sich gegenüberliegend mit einem Abstand zueinander angeordnet, insbesondere verlaufen die Seitenwangen parallel gegenüberliegend zueinander. Im Rahmen der Erfindung sind die Seitenwangen im Vergleich zu dem Steg selber doppelt bzw. bevorzugt mehr als dreimal so lang. Hierdurch wird über die Länge der Seitenwangen eine besonders hohe Biegesteifigkeit bei dem erfindungsgemäßen Lenker in Kraftrichtung innerhalb einer Ebene in der die Seitenwangen liegen erreicht.

Weiterhin besonders bevorzugt sind an den dem Steg gegenüberliegenden Enden der Seitenwangen zumindest abschnittsweise Versteifungskanten ausgebildet, wobei diese Versteifungskanten insbesondere an den sich gegenüberliegenden Enden der Seitenwangen zueinander orientiert gerichtet angeordnet sind. Durch die Versteifungskanten werden zum einen die Krafteinwirkungen, die im wesentlichen orthogonal zu der Ebene in der auch die Seitenwangen verlaufen kompensiert, zum anderen wird die Dauerhaltbarkeit gesteigert.

Durch die gegenüber den Seitenwangen abgebogenen Versteifungskanten führt eine Kraft die innerhalb der Ebene der Seitenwange in den Querlenker eingeleitet wird nicht zu einer Erhöhung der Spannung an einem Ende der Seitenwange, so dass gerade unter Bezug auf die auftretende Dauerbelastung im Betrieb des Querlenkers keine Spannungsrisse oder Mikrorisse entstehen.

Insbesondere mit den zueinander orientierten Versteifungskanten an den Enden der Seitenwangen ist der Mittelabschnitt im Querschnitt im Wesentlichen C-förmig konfiguriert.

Weiterhin bevorzugt sind die Lageraufnahmen als Lagerauge ausgebildet, insbesondere als kreisrundes Lagerauge, wobei jede Lageraufnahme weiterhin bevorzugt aus zwei sich parallel gegenüberliegenden Lageraugen ausgebildet ist. Jedes Lagerauge liegt dann in einem Ende bzw. einer Erstreckung oder Verlängerung der Seitenwange, so dass ganz besonders bevorzugt die zwei parallel mit einem Abstand sich gegenüberliegenden Seitenwangen an ihrem jeweiligen Ende jeweils ein Lagerauge aufweisen.

Weiterhin besonders bevorzugt weist mindestens ein Lagerauge einen Durchzug auf, wobei insbesondere zwei sich gegenüberliegende Lageraugen jeweils einen Durchzug aufweisen und die Kragen der Durchzüge in gleicher Richtung oder aber in entgegengesetzter Richtung orientiert ausgebildet sind. Sofern die Kragen der Durchzüge in entgegengesetzter Richtung orientiert ausgebildet sind besteht im Rahmen der Erfindung eine weitere bevorzugte Ausführungsvariante darin, dass die Kragen aufeinander zuzeigend orientiert angeordnet werden oder aber voneinander weg zeigend orientiert angeordnet werden. Im Rahmen der Erfindung ist es so je nach eingesetztem Lagertyp möglich eine optimale Abstützungsvariante gerade unter Aspekten des Einbringens, beispielsweise des Einpressens und auch des Fixierens des Lagers in dem Querlenker, auszubilden. Im Rahmen der Erfindung ist es möglich, dass die Kragen auch derart lang ausgebildet orientiert werden, dass das Lager an dem Kragen stoffschlüssig fixiert wird.

In einer weiteren bevorzugten Ausführungsvariante weist mindestens ein Lagerauge eine Öffnungsebene auf, wobei das Lagerauge selber in der Öffnungsebene liegt. Bevorzugt liegt die Öffnungsebene im Rahmen der Erfindung in einer Ebene mit der Seitenwange selber. Hierdurch werden die Umformoperationen in dem Umformprozess ebenfalls minimiert, so dass die abgebogenen Seitenwangen bevorzugt derart flächig ausgebildet sind, dass an ihren jeweiligen Enden ein Lagerauge in einer Seitenwangenebene liegt.

Der Mittelabschnitt weist einen bogenförmigen Verlauf auf und in dem bogenförmigen Verlauf ist ein Talbereich ausgebildet. Der bogenförmige Verlauf ist anwendungsspezifisch an die Anforderungen bzw. Belastungen des Querträgers angepasst. Im Rahmen der Erfindung ist es denkbar, dass der bogenförmige Verlauf idealisiert durch einen Radius beschrieben wird, der den Bogen im Bereich des Mittelabschnitts in Form eines im Wesentlichen Halbkreises aufspannt und der Radius zu den Lageraugen hin zu nimmt. Hierbei ist es weiterhin möglich, dass der Radius nur wenige Millimeter, allerdings auch mehrere hundert Millimeter beträgt. Im Rahmen der Entwicklung haben sich hierbei Radien im Bereich von 10 bis 250 mm, bevorzugt 20 bis 200 mm, besonders bevorzugt 30 bis 150 mm und insbesondere 40 bis 120 mm als vorteilhaft erwiesen. Weiterhin ist es aber auch denkbar, den Bereich, durch den der Radius definiert wird, noch enger zu fassen. So sind auch Radien zwischen 45 bis 110 mm, 50 bis 100 mm oder aber 60 bis 90 mm denkbar. Zudem kann der bogenförmige Verlauf im Bereich des Mittelabschnittes einen geraden bzw. linearen Anteil aufweisen. Der Talbereich ist insbesondere durch den Steg des Querlenkers definiert, wobei der tiefste Punkt des Talbereichs unterhalb einer durch den Mittelpunkt der Lageraufnahmen gebildeten Geraden angeordnet ist. Der Querlenker weist somit einen hakenförmigen oder aber auch sichelförmigen Verlauf auf, wobei bei Verbindung beider Lageraufnahmen mit einer Geraden der bogenförmige Abschnitt abweichend von der Geraden verläuft. Zwischen dem tiefsten Punkt des bogenförmigen Abschnitts, mithin dem tiefsten Punkt des Talbereichs und der Geraden ist im Rahmen der Erfindung ein Abstand ausgebildet. Der vertikale Abstand zwischen dem tiefsten Punkt des bogenförmigen Abschnitts und der Geraden ist im Rahmen der Erfindung hierbei von dem Verhältnis zu dem horizontalen Abstand der beiden Mittelpunkte der zwei Lageraugen abhängig. Von Vorteil hat sich hier ein Verhältnis des vertikalen Abstandes zu dem horizontalen Abstand in einem Intervall von 1:4 bis hin zu 1:8, bevorzugt zwischen 1:5 und 1:7 und besonders bevorzugt in einem Verhältnis von 1:6 erwiesen. In einer ganz besonders bevorzugten Ausführungsvariante wird in Bogenrichtung unterhalb der Lageraugen eine Gerade angeordnet, wobei der tiefste Punkt des Talbereichs ferner unterhalb dieser Geraden angeordnet ist. Mithin ist es möglich, im Rahmen der Erfindung einen hochkomplex geformten Querträger in einfacher Art und Weise auszubilden.

Im Rahmen der Erfindung ist der Querlenker weiterhin bevorzugt aus einer Blechplatine hergestellt, wobei die Blechplatine insbesondere aus einer Stahllegierung oder aber auch aus einer Leichtmetalllegierung, insbesondere einer Aluminiumlegierung ausgebildet ist. Im Falle einer Blechplatine aus einer Stahllegierung ist diese weiterhin besonders bevorzugt aus einer härtbaren Stahllegierung ausgebildet, ganz besonders bevorzugt aus einer Stahllegierung, die durch ein Warmumform- und Presshärtprozess in ihren Festigkeitseigenschaften einstellbar ist.

Weiterhin bevorzugt sind an dem Querlenker zur Gewichts- und Materialoptimierung Wandstärken ausgebildet, die zumindest partiell voneinander verschieden sind. Insbesondere variiert die Wandstärke des Querträgers in dessen Längs- oder aber auch Querrichtung, mithin in seiner Axialrichtung oder aber auch Radialrichtung voneinander. So ist es im Rahmen der Erfindung möglich, den Querlenker in partiell weniger belasteten Bereichen mit einer dünneren Wandstärke auszubilden und hierdurch Material und Gewicht einzusparen und in partiell höher belasteten Bereichen mit einer höheren Wandstärke auszubilden, so dass der Querlenker die geforderten Festigkeitsvorgaben erfüllt. Im Rahmen der Erfindung ist es denkbar, dass die Wandstärke der Bleche in einem Bereich zwischen 0,5 und 5 mm, bevorzugt zwischen 1 und 4,5 mm und besonders bevorzugt in einem Bereich zwischen 1,5 und 4 mm liegt. Insbesondere kann die Blechdicke auch auf ein Intervall zwischen 2 und 3 mm beschränkt werden. Zur Herstellung des Querlenkers wird dazu besonders bevorzugt eine partiell abgewalzte Platine, auch als Taylor-Rolled-Blank bekannt, verwendet oder aber eine Platine mit homogener Wandstärke, die dann durch den Umformprozess derart abgestreckt wird, dass sich Bereiche mit voneinander verschiedener Wandstärke ergeben.

Weiterhin bevorzugt weist der erfindungsgemäße Querträger in einem Mittelabschnitt Ausnehmungen und/oder Öffnungen auf, insbesondere weisen die Seitenwangen des Mittelabschnitts Ausnehmungen und/oder Verstärkungsgeometrien auf, ganz besonders bevorzugt sind die Verstärkungsgeometrien in Form von Sicken ausgebildet. Hierdurch werden die Längs- und Quersteifigkeitseigenschaften des erfindungsgemäßen Querträgers weiter verbessert. Im Rahmen der Erfindung können auch in dem Mittelabschnitt, insbesondere im Übergang von Mittelabschnitt zu Lageraufnahme Entlastungsprofilierungen ausgebildet sein, die die unter Umständen örtlich auftretenden Spitzenspannungsbelastungen innerhalb des Bauteils umleiten.

Die Aufgabe wird weiterhin mit einem erfindungsgemäßen Verfahren zur Herstellung eines Querlenkers mit mindestens einem der zuvor genannten Merkmale durch folgende Verfahrensschritte gelöst:
- Bereitstellen einer Platine und Einlegen in ein Umformwerkzeug;
- Ausformen eines Steges in Längsrichtung der Platine mit einem bogenförmigen Verlauf orthogonal zu einer Platinenebene;
- Abbiegen von sich von dem Steg erstreckenden Seitenwangen;
- Herstellen von Löchern für die Lageraufnahmen;
- Herstellen von Durchzügen in den Löchern.

Im Rahmen der Erfindung kann die Platine wie bereits zuvor erwähnt als partiell abgewalzte Platine in dem Umformwerkzeug eingelegt sein oder aber auch in dem Umformwerkzeug optional lokal abgestreckt werden, so dass sich an dem Bauteil voneinander verschiedene Wandstärken einstellen.

Die zuvor benannten Verfahrensschritte sind im Rahmen der Erfindung derart untereinander vertauschbar, dass zunächst an der Platine die Löcher vorgestanzt werden und anschließend die mit Löchern vorgestanzte Platine in dem Umformwerkzeug eingelegt wird. Im Rahmen der Erfindung kann jedoch auch das Einbringen der Löcher erst in dem Umformwerkzeug erfolgen oder aber die Löcher können auch erst nach Entnahme des vorgeformten Querträgerrohlings in einen separaten Lochungsschritt eingebracht werden. Bevorzugt werden jedoch im Rahmen der Erfindung die Löcher direkt in dem Umformwerkzeug mit eingebracht, wobei im Anschluss daran die Durchzüge ebenfalls in dem Umformwerkzeug mit eingebracht werden. Weiterhin bevorzugt kann insbesondere im Rahmen eines pressgehärteten Bauteils danach erst eine Presshärtung erfolgen, so dass die Umformoperation bei verhältnismäßig weicher Werkstoffeigenschaft durchgeführt wird und im Anschluss daran das Bauteil homogen gehärtet ist. Insbesondere ist es von Vorteil wenn die Löcher direkt während des Umformprozesses in den Querlenker eingebracht werden und im Anschluss daran mit Durchzügen versehen werden, da das Bauteil somit gleichzeitig kalibriert wird und nach Entnahme eine hohe Präzision sowohl des Relativabstandes der beiden Lageraufnahmen, als auf der Absolutabstände der Lageraufnahmen aufweist.

Die Komplexität beim Herstellungsverfahren besteht darin, dass an dem Lenker zunächst eine Bogenform ausgebildet wird, wobei insbesondere der Steg zunächst ausgeformt bzw. im Rahmen der Erfindung mit einem bogenförmigen Verlauf der gesamten Platine angeformt bzw. ausgeformt wird, wobei sich der bogenförmige Verlauf orthogonal von der ursprünglichen Platinenebene erstreckt. Im Anschluss hieran werden die sich von dem Steg erstreckenden Seitenwangen abgebogen und weisen somit ebenfalls einen bogenförmigen Verlauf auf, wobei der bogenförmige Verlauf um eine Achse verläuft, die orthogonal zu der Seitenwangenebene in Endposition liegt. Insbesondere durch die Möglichkeit den Querträger mit voneinander verschiedenen Wandstärken herzustellen ist es möglich durch lokale Abstreckungen während des Umformprozesses den Querlenker als einstückiges und einteiligen insbesondere werkstoffeinheitliches Bauteil in nur einer Umformoperation herzustellen, ohne dass das Bauteil verminderte Festigkeitseigenschaften inne hat. Insbesondere durch das Anformen der Versteifungskanten können die freiliegenden Enden der Seitenwangen mithin die Enden die dem Steg gegenüberstehen derart spitzenspannungsentlastet werden, dass hier keine Haarriss- oder aber Ermüdungsrisse auftreten.

Besonders bevorzugt wird der Querlenker als Warmumform- und Presshärtbauteil hergestellt, so dass er hochfeste oder aber höchstfeste Eigenschaften besitzt. Hierzu ist es im Rahmen der Erfindung möglich, die Platine bereits beim Platinenzuschnitt oder kurz danach zumindest partiell auf über Austenitisierungstemperatur zu erwärmen, so dass diese warm umgeformt und anschließend im Umformwerkzeug durch eine Presshärtung abgeschreckt wird.

Weitere Vorteile, Merkmale, Eigenschaften und Aspekte der vorliegenden Erfindung sind Bestandteil der nachfolgenden Beschreibung. Bevorzugte Ausführungsvarianten werden in den schematischen Figuren dargestellt. Diese dienen dem einfachen Verständnis der Erfindung. Es zeigen:
- Figur 1a und b: einen erfindungsgemäßen Querlenker und
- Figur 2a1 bis f: ein Herstellungsverfahren des erfindungsgemäßen Querlenkers in mehreren Verfahrensstufen.

In den Figuren werden für gleiche oder ähnliche Bauteile dieselben Bezugszeichen verwendet, auch wenn eine wiederholte Beschreibung aus Vereinfachungsgründen entfällt.

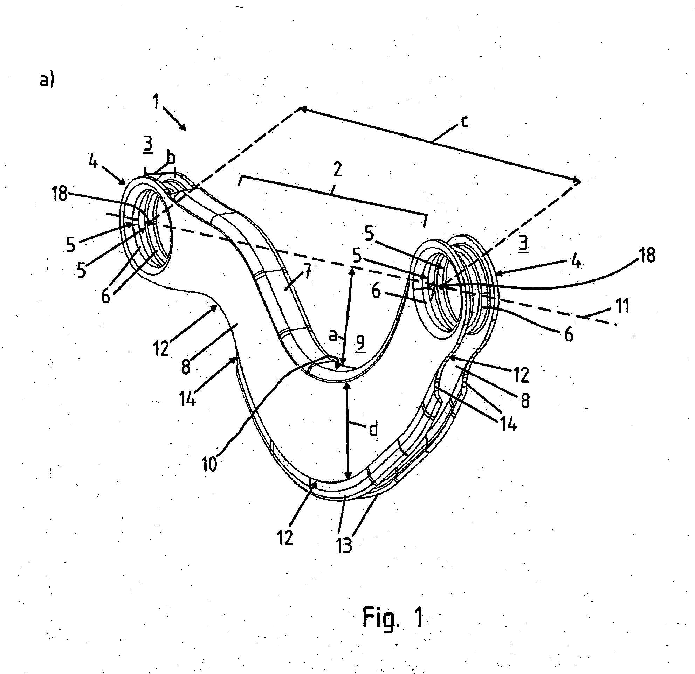

Figur 1a zeigt einen erfindungsgemäßen Querlenker 1 aufweisend einen Mittelabschnitt 2, der einen bogenförmigen Verlauf besitzt. An den Enden 3 des Querlenkers 1 ist jeweils eine Lageraufnahme 4 angeordnet, wobei die hier dargestellte Lageraufnahme 4 aus jeweils zwei gegenüberliegenden Lageraugen 5 ausgebildet ist. Die Lageraugen 5 selber sind derart ausgebildet, dass sie einen Durchzug besitzen, wobei der Durchzug insbesondere durch einen Kragen 6 ausgebildet ist. Der Kragen 6 selbst ist wiederum bei beiden Lageraufnahmen 4 derart angeordnet, dass zwei gegenüberliegende Kragen 6 aufeinander zuzeigend orientiert sind. Die Mittelpunkte 18 der Lageraufnahmen 4 weisen einen Abstand c zueinander auf. Hierbei beträgt der Abstand zwischen 200 bis 500 mm, bevorzugt 300 bis 400 mm und besonders bevorzugt 325 bis 400 mm.

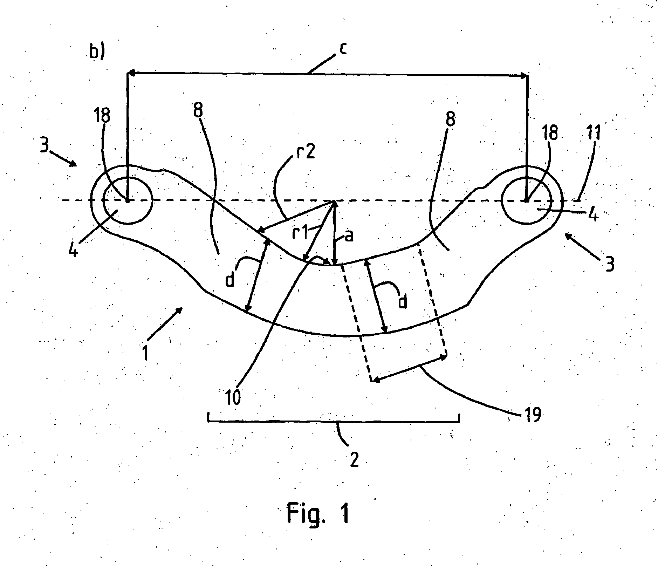

Ferner weist der Mittelabschnitt 2 einen Steg 7 auf, wobei sich von dem Steg 7 aus jeweils seitlich eine Seitenwange 8 erstreckt. Die Seitenwangen 8 weisen genauso wie der Steg 7 in dem Mittelabschnitt 2 einen bogenförmigen bzw. halbkreisförmigen Verlauf auf, der sich zu den Lageraufnahmen 4 hin verändert. Im Bereich des Mittelabschnitts 2 ist der bogenförmige bzw. halbkreisförmige Verlauf durch einen Radius r1 bestimmt, wobei sich dieser zu den Lageraugen 4 hin vergrößert, dargestellt durch den Radius r2, was in der Figur 1b dargestellt ist. Zudem weist die Seitenwange 8 eine Höhe d auf, welche in einem Bereich zwischen 50 bis 90 mm, bevorzugt zwischen 55 bis 80 mm, besonders bevorzugt 60 bis 75 mm und insbesondere zwischen 65 bis 70 mm liegt. An dem Steg 7 selbst ist ein Talbereich 9 ausgebildet, wobei der Talbereich 9 einen tiefsten Punkt 10 besitzt. Gegenüber einer die beiden Mittelpunkte 18 der Lageraugen 5 verbindenden Geraden 11 weist der tiefste Punkt 10 des Talbereiches 9 einen Abstand a auf, welcher in dem Talbereich dem Radius r1 des bogenförmigen Verlaufs entspricht. An den dem Steg 7 gegenüberliegenden Enden 12 der Seitenwangen 8 ist jeweils eine Versteifungskante 13 umgebogen derart, dass die hier zwei dargestellten Versteifungskanten 13 zueinander hin zeigend orientiert sind. In einem Übergangsbereich 14 sind die Verstärkungskanten 13 bogenförmig in die freien Enden 12 der Seitenwangen 8 übergehend, so dass hier eine optimierte Spannungsleitung innerhalb des Bauteils erfolgt. Die Lageraugen liegen bevorzugt auf die linke Bildebene in einem Abstand b zueinander. Gleiches gilt für die Seitenwangen. Der Abstand b liegt im Rahmen der Erfindung dabei zwischen 15 bis 30 mm, bevorzugt 19 bis 27 mm, besonders bevorzugt zwischen 21 bis 25 mm und beträgt insbesondere 23 mm.

Figur 1b zeigt weiterhin eine flächige Ansicht des erfindungsgemäßen Querlenkers. Die Mittelpunkte 18 der Lageraufnahmen 4, welche sich an den Enden 3 des Querlenkers 1 befinden, weisen einen horizontalen Abstand c zueinander auf. Der Mittelabschnitt 2 weist im Talbereich 9 an seinem tiefsten Punkt 10 einen Abstand a zur der die beiden Mittelpunkte verbindenden Geraden 11 auf. Der Abstand a ist hierbei von dem Abstand c der beiden Mittelpunkte 18 der Lageraufnahmen 4 abhängig. Während der Entwicklung des Bauteils haben sich hier Verhältnisse in einem Intervall zwischen 1:4 bis 1:8, bevorzugt von 1:5 bis 1:7 und besonders bevorzugt in einem Verhältnis von 1:6 erwiesen.

Weiterhin entspricht der Abstand a im Talbereichs 9 im Wesentlichen dem halbkreisförmigen Radius r1. Dieser vergrößert sich zu den Enden 3 des Querlenkers 1 hin auf einen Radius r2. Zudem wird auch der im Wesentlichen gerade verlaufende Abschnitt 19 gezeigt, welcher sich ebenfalls im Mittelbereich 2 des Querträgers 1 befindet.

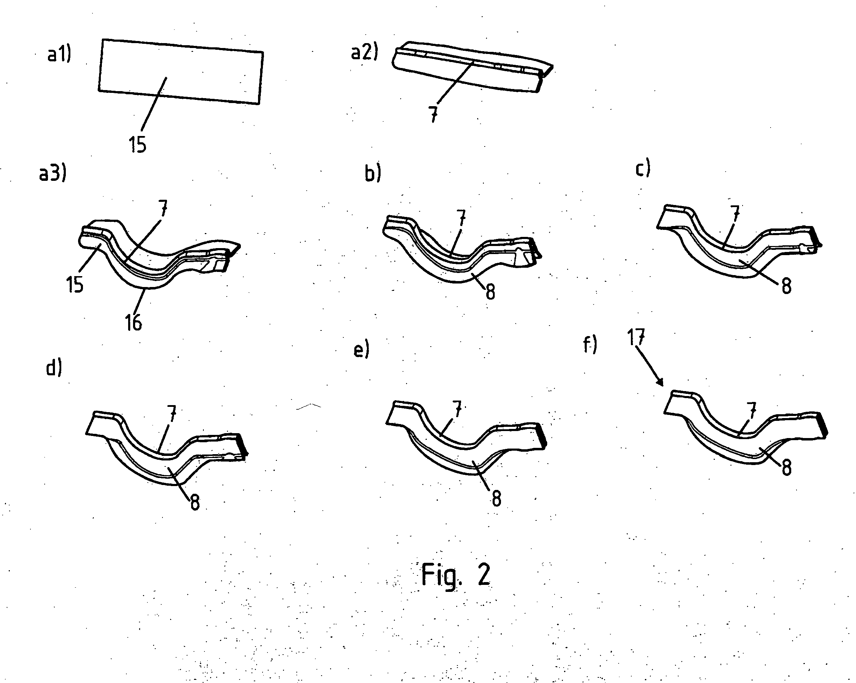

Figur 2a1 bis f zeigt das Vorgehen zur Herstellung des erfindungsgemäßen Querlenkers 1. In Figur 2a1 ist zunächst eine Platine 15 dargestellt, welche für den weiteren Verarbeitungsprozess bereitgestellt wird und in das Umformwerkzeug eingelegt wird. In einem ersten Umformungsschritt wird der ebenen Platine 15 zunächst ein Steg 7 angeformt, welcher die Platine 15 im Wesentlichen in zwei gleich große Abschnitte aufteilt, wie in der Figur 2a2 gezeigt ist. Anschließend wird die Platine in einem zweiten Schritt endkonturnah ausgeformt. Hierbei entstehen gemäß Figur 2a3 bogenförmig umgeformte Teilabschnitte 16 der Platine 15. In einem weiteren Umformschritt, gemäß Figur 2b, werden aus den bogenförmig geformten Teilabschnitten 16 Seitenwangen 8 abgebogen, in welche in einem späteren, nicht dargestellten Schritt die Lageraufnahmen 4 eingebracht werden.

Gemäß den Figuren 2c bis 2f werden die Seitenwangen 8 derart abgebogen, dass ein gemäß Figur 2f bereitgestellter Querlenkerrohling 17 hergestellt ist, der dann in nicht näher dargestellten weiteren Umform- bzw. Bearbeitungsoperationen beispielsweise gelocht wird oder aber auch dessen Kanten beschnitten oder aber vergütet werden. Durch das erfindungsgemäße Verfahren ist es zudem mögliche sämtliche Umformungsschritte, wie in den Figuren 2a1 bis 2f dargestellt, innerhalb eines Umformungsprozesses in nur einem Umformwerkzeug zu realisieren, wobei auch die Lochung der Lageraugen während des Umformungsprozesses in dem einen Umformwerkzeug durchgeführt wird.

### Bezugszeichen:

- 1 -: Querlenker
- 2 -: Mittelabschnitt
- 3 -: Ende zu 1
- 4 -: Lageraufnahme
- 5 -: Lagerauge
- 6 -: Kragen
- 7 -: Steg
- 8 -: Seitenwange
- 9 -: Talbereich
- 10 -: tiefster Punkt
- 11 -: Gerade
- 12 -: Ende zu 8
- 13 -: Versteifungskante
- 14 -: Übergangsbereich
- 15 -: Platine
- 16 -: bogenförmig umgeformt
- 17 -: Querlenkerrohling
- 18 -: Mittelpunkt zu 4
- 19 -: gerader Abschnitt

- a -: Abstand
- b -: Abstand
- c -: Abstand
- d -: Höhe
- r1 -: Radius zu 2
- r2 -: Radius zu 8

## Patentansprüche

1. Querlenker (1) zur Anordnung an einem Kraftfahrzeug, wobei der Querlenker (1) zwei Lageraufnahmen (4) zur Aufnahme von elastischen Lagern aufweist und einen bogenförmigen Mittelabschnitt (2) besitzt, der sich zwischen den Lageraufnahmen (4) erstreckt, wobei der Mittelabschnitt (2) einen Talbereich (9) aufweist und der Talbereich (9) durch einen Steg (7) ausgebildet ist, wobei der tiefste Punkt (10) des Talbereichs (9) unterhalb einer durch die Mittelpunkte (18) der Lageraufnahmen (4) gebildeten Geraden (11) angeordnet ist, wobei der Querlenker (1) als einteiliges und werkstoffeinheitliches Blechumformbauteil ausgebildet ist, wobei der Querlenker (1) in dem bogenförmigen Mittelabschnitt (2) im Querschnitt als offenes Hohlprofil ausgebildet ist
**dadurch gekennzeichnet, dass**
der Mittelabschnitt (2) in dem Talbereich (9) an seinem tiefsten Punkt (10) einen Abstand a zur die beiden Mittelpunkte (18) der Lageraufnahmen (4) verbindenden Geraden (11) aufweist, wobei der Abstand c der beiden Mittelpunkte (18) der Lageraufnahmen (4) 200 bis 500 mm beträgt und das Verhältnis zwischen Abstand a und Abstand c in einem Intervall zwischen 1:4 bis 1:8 liegt.

2. Querlenker nach Anspruch 1, **dadurch gekennzeichnet, dass** als Lager Gummilager in den Querlenker (1) eingesetzt sind.

3. Querlenker nach einem der vorhergehenden Ansprüche, **dadurch gekennzeichnet, dass** der Mittelabschnitt (2) im Querschnitt aus dem Steg (7) und sich von dem Steg (7) erstreckenden Seitenwangen (8) ausgebildet ist, wobei die Seitenwangen (8) gegenüberliegend in einem Abstand zueinander angeordnet sind.

4. Querlenker nach einem der vorhergehenden Ansprüche, **dadurch gekennzeichnet, dass** an den dem Steg (7) gegenüberliegenden Enden (12) der Seitenwangen (8) zumindest abschnittsweise eine Versteifungskante (13) ausgebildet ist, wobei die Versteifungskanten (13) der gegenüberliegenden Enden (12) zueinander gerichtet orientiert sind.

5. Querlenker nach einem der vorhergehenden Ansprüche, **dadurch gekennzeichnet, dass** die Lageraufnahmen (4) als Lagerauge (5) ausgebildet sind.

6. Querlenker nach Anspruch 5, **dadurch gekennzeichnet, dass** mindestens ein Lagerauge (5) einen Durchzug aufweist.

7. Querlenker nach Anspruch 5 oder 6, **dadurch gekennzeichnet, dass** mindestens ein Lagerauge (5) eine Öffnungsebene aufweist, wobei die Öffnungsebene in einer Ebene mit der Seitenwange (8) liegt.

8. Querlenker nach einem der vorhergehenden Ansprüche, **dadurch gekennzeichnet, dass** er Querlenker (1) als Warmumform- und Presshärtbauteil oder dass der Querlenker (1) als Leichtmetallbauteil ausgebildet ist.

9. Querlenker nach Anspruch 1, **dadurch gekennzeichnet, dass** die Wandstärke des Querlenkers (1) zumindest partiell voneinander verschieden ausgebildet ist.

10. Querlenker nach einem der vorhergehenden Ansprüche, **dadurch gekennzeichnet, dass** der Mittelabschnitt (2) Ausnehmungen und/oder Öffnungen aufweist.

11. Verfahren zur Herstellung eines Querlenkers (1) mit den Merkmalen von mindestens Anspruch 1, **gekennzeichnet durch** folgende Verfahrensschritte:
- Bereitstellen einer Platine (15) und Einlegen in ein Umformwerkzeug;
- Ausformen eines Steges (7) in Längsrichtung der Platine (15) mit einem bogenförmigen Verlauf orthogonal zu einer Platinenebene;
- Abbiegen von sich von dem Steg (7) erstreckenden Seitenwangen (8);
- Herstellen von Löchern für die Lageraufnahmen (4);
- Herstellen von Durchzügen in den Löchern.

12. Verfahren nach Anspruch 11, **dadurch gekennzeichnet, dass** die Platine (15) mit Löchern vorkonfektioniert wird oder dass die. Löcher in dem Umformwerkzeug hergestellt werden oder dass die Löcher nach der Entnahme eines Querlenkerröhlings (17) aus dem Umformwerkzeug an dem Querlenkerrohling (17) hergestellt werden.

13. Verfahren nach Anspruch 11 oder 12, **dadurch gekennzeichnet, dass** die Durchzüge direkt bei Einbringen der Löcher in die Seitenwangen (8) hergestellt werden.

14. Verfahren nach einem der Ansprüche 11 bis 13, **dadurch gekennzeichnet, dass** der Querlenker als Warmumform- und Presshärtbauteil hergestellt wird.

15. Verfahren nach einem der Ansprüche 11 bis 14, **dadurch gekennzeichnet, dass** am Ende (12) der Seitenwangen (8) Versteifungskanten (13) umgebogen werden, wobei die Versteifungskanten (13) aufeinander zuzeigend orientiert sind.

## Claims

1. Transverse control arm (1) for mounting on a motor vehicle, the transverse control arm (1) comprising two bearing recesses (4) for accommodating resilient bearings and having an arc-shaped central portion (2) which extends between the bearing recesses (4), the central portion (2) having a valley region (9) and the valley region (9) being formed by a crosspiece (7), the lowest point of the valley region (9) being arranged underneath a straight line (11) formed by the centres of the bearing recesses (4), the transverse control arm being embodied as a one-piece sheet-metal formed component of a unified material, the transverse control arm (1) being configured as an open hollow profile in cross-section in the arc-shaped central portion (2)
**characterised in that**
the central portion has in the valley region at its lowest point a distance a to the straight line connecting the two centres of the bearing recesses, the spacing c of the two centres of the bearing recesses being 200 to 500 mm and the ratio between distance a and distance c being in an interval between 1:4 and 1:8.

2. Transverse control arm according to claim 1, **characterised in that** rubber bearings are inserted as the bearings in the transverse control arm (1).

3. Transverse control arm according to one of the preceding claims, **characterised in that** in cross-section the central portion (2) is formed from the crosspiece (7) and side cheeks (8) extending from the crosspiece (7), the side cheeks (8) being arranged opposite and spaced from one another.

4. Transverse control arm according to one of the preceding claims, **characterised in that** a reinforcing edge (13) is formed, at least in parts, at the ends (12) of the side cheeks (8) opposite the crosspiece (7), the reinforcing edges (13) of the opposing ends (12) being oriented towards one another.

5. Transverse control arm according to one of the preceding claims, **characterised in that** the bearing recesses (4) are embodied as bearing lugs (5).

6. Transverse control arm according to claim 5, **characterised in that** at least one bearing lug (5) comprises a through-opening.

7. Transverse control arm according to claim 5 or 6, **characterised in that** at least one bearing lug (5) comprises an opening plane, the opening plane being in the same plane as the side cheek (8).

8. Transverse control arm according to one of the preceding claims, **characterised in that** the transverse control arm (1) is embodied as a hot formed and press hardened component or **in that** the transverse control arm (1) is embodied as a light metal component.

9. Transverse control arm according to claim 1, **characterised in that** the wall thickness of the transverse control arm (1) is configured to differ at least partially.

10. Transverse control arm according to one of the preceding claims, **characterised in that** the central portion (2) comprises recesses and/or openings.

11. Method for producing a transverse control arm (1) having the features of at least claim 1, **characterised by** the following steps:
- preparing a plate (15) and placing it in a forming tool;
- forming a crosspiece (7) in the longitudinal direction of the plate (15) with an arc-shaped configuration perpendicular to a plane of the plate;
- bending side cheeks (8) extending away from the crosspiece (7);
- producing holes for the bearing recesses (4);
- producing through-openings in the holes.

12. Method according to claim 11, **characterised in that** the plate (15) is prefabricated with holes or the holes are produced in the forming tool or the holes are produced on a transverse control arm blank (17) after the transverse control arm blank (17) has been removed from the forming tool.

13. Method according to claim 11 or 12, **characterised in that** the through-openings are produced directly as the holes are formed in the side cheeks (8).

14. Method according to one of claims 11 to 13, **characterised in that** the transverse control arm is produced as a hot formed and press hardened component.

15. Method according to one of claims 11 to 14, **characterised in that** reinforcing edges (13) are bent round at the end (12) of the side cheeks (8), the reinforcing edges (13) being oriented facing one another.

## Revendications

1. Bras oscillant transversal (1) destiné à être disposé au niveau d'un véhicule automobile, où le bras oscillant transversal (1) présente deux logements de palier (4) servant à loger des paliers élastiques et comporte une section centrale (2) présentant une forme d'arc, laquelle s'étend entre les logements de palier (4), où la section centrale (2) présente une zone de creux (9) et la zone de creux (9) est réalisée par une entretoise (7), où le point le plus profond (10) de la zone de creux (9) est disposé sous une droite (11) formée par les points centraux des logements de palier (4),où le bras oscillant transversal (1) est réalisé sous la forme d'un élément mis en forme en tôle présentant une seule partie et un seul matériau, où le bras oscillant transversal (1) est réalisé, dans la section transversale, sous la forme d'un profilé creux ouvert dans la section centrale (2) présentant une forme d'arc,
**caractérisé en ce que**
la section centrale dans la zone de creux au niveau de son point le plus profond présente une distance a à la droite reliant les deux points centraux des logements de palier, où la distance c des deux points centraux des logements de palier va de 200 à 500 mm et le rapport entre la distance a et la distance c est compris dans un intervalle entre 1:4 et 1:8.

2. Bras oscillant transversal selon la revendication 1, **caractérisé en ce que** des paliers en caoutchouc sont utilisés comme paliers dans le bras oscillant transversal (1).

3. Bras oscillant transversal selon l'une quelconque des revendications précédentes, **caractérisé en ce que** la section centrale (2) est réalisée dans la section transversale à partir d'une entretoise (7) et de joues latérales (8) s'étendant depuis l'entretoise (7), où les joues latérales (8) sont disposées de manière à se faire face à une certaine distance les unes des autres.

4. Bras oscillant transversal selon l'une quelconque des revendications précédentes, **caractérisé en ce qu'**au moins par endroits une arête de renforcement (13) est réalisée au niveau des extrémités (12), faisant face à l'entretoise (7), des joues latérales (8), où les arêtes de renforcement (13) des extrémités (12) se faisant face sont orientées de manière dirigée les unes vers les autres.

5. Bras oscillant transversal selon l'une quelconque des revendications précédentes, **caractérisé en ce que** les logements de palier (4) sont réalisés sous la forme d'œillet de palier (5).

6. Bras oscillant transversal selon la revendication 5, **caractérisé en ce qu'**au moins un œillet de palier (5) présente un passage.

7. Bras oscillant transversal selon la revendication 5 ou 6, **caractérisé en ce qu'**au moins un œillet de palier (5) présente un plan d'ouverture, où le plan d'ouverture se trouve dans un plan avec la joue latérale (8).

8. Bras oscillant transversal selon l'une quelconque des revendications précédentes, **caractérisé en ce que** le bras oscillant transversal (1) est réalisé sous la forme d'un élément mis en forme à chaud et d'un élément de trempe sous presse ou **en ce que** le bras oscillant transversal (1) est réalisé sous la forme d'un élément en métal léger.

9. Bras oscillant transversal selon la revendication 1, **caractérisé en ce que** l'épaisseur du bras oscillant transversal (1) est réalisée de manière différente au moins partiellement.

10. Bras oscillant transversal selon l'une quelconque des revendications précédentes, **caractérisé en ce que** la section centrale (2) présente des évidements et/ou des ouvertures.

11. Procédé de fabrication d'un bras oscillant transversal (1) présentant les caractéristiques d'au moins la revendication 1, **caractérisé par** les étapes de procédé qui suivent consistant à :
- fournir une platine (15) et la placer dans un outil de façonnage ;
- mettre en forme une entretoise (7) dans la direction longitudinale de la platine (15) avec un tracé présentant une forme d'arc de manière perpendiculaire par rapport à un plan de platine ;
- plier des joues latérales (8) s'étendant depuis l'entretoise (7) ;
- fabriquer des trous pour les logements de palier (4) ;
- fabriquer des passages dans les trous.

12. Procédé selon la revendication 11, **caractérisé en ce que** la platine (15) est confectionnée au préalable avec des trous ou **en ce que** les trous sont fabriqués dans l'outil de façonnage ou **en ce que** les trous sont fabriqués, après le retrait d'une ébauche de bras oscillant transversal (17) de l'outil de façonnage, au niveau de l'ébauche de bras oscillant transversal (17).

13. Procédé selon la revendication 11 ou 12, **caractérisé en ce que** les passages sont fabriqués directement lorsque les trous sont pratiqués dans les joues latérales (8).

14. Procédé selon l'une quelconque des revendications 11 à 13, **caractérisé en ce que** le bras oscillant transversal est fabriqué sous la forme d'un élément façonné à chaud et de trempe sous presse.

15. Procédé selon l'une quelconque des revendications 11 à 14, **caractérisé en ce que** des arêtes de renforcement (13) sont repliées au niveau de l'extrémité (12) des joues latérales (8), où les arêtes de renforcement (13) sont orientées de manière à se faire face.
